# EUROPEAN PATENT SPECIFICATION

(11) **EP 1 547 682 B1**
(45) Date of publication and mention of the grant of the patent: **09.08.2006**
(21) Application number: 04030356.2
(22) Date of filing: 21.12.2004
(51) Int. Cl.: B01J 29/068, B01D 53/94, F01N 3/28

(54) **Diesel engine exhaust emission control system**
System zur Begrenzung der Abgasemissionen eines Dieselmotors
Système de contrôle d'emission de gaz d'échappement d'un moteur Diesel

(30) Priority: 26.12.2003 JP 2003433302
(43) Date of publication of application: 29.06.2005
(73) Proprietor: HONDA MOTOR CO., Ltd., Tokyo (JP)
(72) Inventor: Tokushima, Kimihiro, Wako-shi Saitama (JP); Onodera, Kouta, Wako-shi Saitama (JP); Kikuchi, Masahiro, Wako-shi Saitama (JP); Terada, Kazuhide, Wako-shi Saitama (JP); Hosogai, Seiichi, Wako-shi Saitama (JP)
(74) Representative: Prechtel, Jörg

(56) References cited:
- EP-A- 1 184 556
- PATENT ABSTRACTS OF JAPAN vol. 1997, no. 08, 29 August 1997 (1997-08-29) -& JP 09 103651 A (TOYOTA CENTRAL RES & DEV LAB INC; TOYOTA MOTOR CORP), 22 April 1997 (1997-04-22)
- PATENT ABSTRACTS OF JAPAN vol. 1999, no. 10, 31 August 1999 (1999-08-31) & JP 11 138007 A (HONDA MOTOR CO LTD), 25 May 1999 (1999-05-25)

## Description

### BACKGROUND OF THE INVENTION

### FIELD OF THE INVENTION

The present invention relates to a diesel engine exhaust emission control system.

### THE RELATED ART

Conventionally, as an exhaust emission control system for cleaning up NOx contained in the exhaust gas of a diesel engine, a system employing an NOx-selective reduction type catalyst is known. This catalyst is a mixture of Pt particles and a zeolite that can adsorb HC which serves as a reducing agent, but has a problem that the NOx clean-up temperature range is extremely small. This is due to a correlation between the average particle size of the Pt particles and the maximum temperature at which cleaning up of NOx is conducted, where the smaller the average particle size of the Pt particles, the lower the maximum temperature at which cleaning up of NOx is conducted, and the larger the average particle size of the Pt particles, the higher the maximum temperature at which cleaning up of NOx is exhibited.

In order to expand the NOx clean-up temperature range, an exhaust emission control system in which the average particle size of Pt particles disposed on the upstream side of an exhaust pipe is set to be smaller than the average particle size of Pt particles disposed on the downstream side has been disclosed in JP-A-9-103651 which corresponds to the preamble of claim 1.

However, the ability of cleaning up NOx in this system is poor in a low exhaust gas temperature region, leading to a problem that NOx cannot be sufficiently cleaned throughout the entire exhaust gas temperature region.

JP-A-11 138 007 discloses a structure of a first catalyst and a second catalyst, both containing Pt particles and a zeolite, the first catalyst being additionally provided with CeO₂ to increase the NOx conversion rate without substantially decreasing the maximum NOx conversion temperature.

### SUMMARY OF THE INVENTION

It is an object of the present invention to provide an exhaust emission control system that can sufficiently clean up NOx throughout the entire exhaust gas temperature region.

In order to attain this object, in accordance with the present invention, there is provided a diesel engine exhaust emission control system according to claim 1. The system includes, in an exhaust pipe of a diesel engine, a first cleaner and a second cleaner installed sequentially from the diesel engine side, the first cleaner including Pt particles having an average particle size of d₁ of ≤ 10 nm, CeO₂, and a zeolite, and the second cleaner including Pt particles having an average particle size d₂ of ≥ 15 nm, and a zeolite.

With this arrangement, in a low exhaust gas temperature region, the zeolite of the first cleaner adsorbs HC which serves as a reducing agent, and the Pt particles having a small average particle size function as a catalyst, thus carrying out reductive cleaning up of NOx. Furthermore, since CeO₂ exhibits the function of adsorbing NOx, the amount of NOx emitted into the atmosphere is reduced. On the other hand, in a high exhaust gas temperature region, since mainly the zeolite of the second cleaner adsorbs HC and the Pt particles having a large average particle size function as a catalyst, reductive cleaning up of NOx is carried out. The NOx adsorbed on the CeO₂ is released at about 200°C or higher, and the thus-released NOx is subjected to reductive cleaning up mainly in the second cleaner, in the same manner as stated above.

As described above, in accordance with the present invention, it is possible to provide an exhaust emission control system for diesel engine that can sufficiently clean up NOx throughout the entire exhaust gas temperature region.

The above-mentioned object, other objects, characteristics, and advantages of the present invention will become apparent from an explanation of a preferred embodiment that will be described in detail below by reference to the attached drawings.

### BRIEF DESCRIPTION OF THE DRAWINGS

FIG. 1 is a diagram for explaining an NOx clean-up system.
FIG. 2 is a diagram for explaining an experimental NOx clean-up system.
FIG. 3 is a sectional view of an essential part of Example (1) of a first cleaner.
FIG. 4 is a sectional view of an essential part of Example (1) of a second cleaner.
FIG. 5 is a sectional view of an essential part of Example (2) of the first cleaner.
FIG. 6 is a sectional view of an essential part of Example (3) of the first cleaner.

### DESCRIPTION OF THE PREFERRED EMBODIMENTS

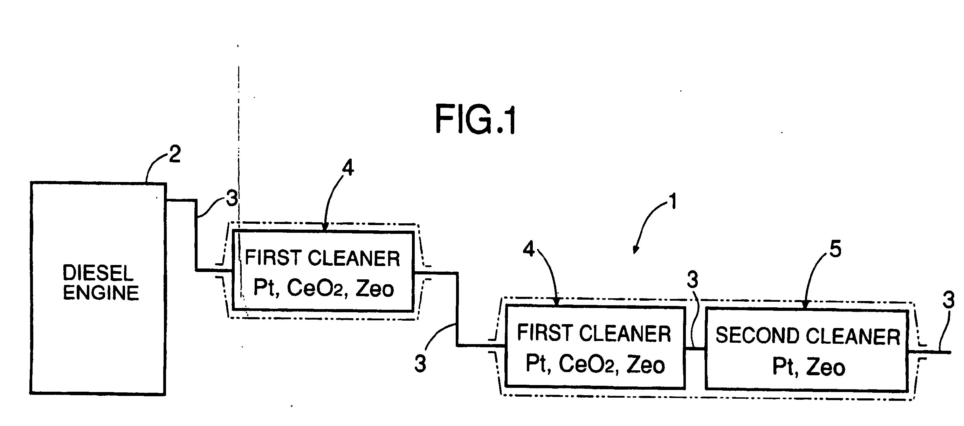

An exhaust emission control system 1 shown in FIG. 1 includes, in an exhaust pipe 3 of a diesel engine 2, two first cleaners 4 and a second cleaner 5 installed sequentially from the diesel engine 2 side. One of the first cleaners 4 is disposed immediately below the diesel engine 2, and the other first cleaner 4 and the second cleaner 5 are disposed beneath a vehicle floor. Either of the two first cleaners 4 may be omitted.

Each first cleaner 4 includes Pt particles having an average particle size d₁ of ≤ 10 nm, CeO₂, and a zeolite (Zeo). It is not desirable for the average particle size d₁ of the Pt particles to be greater than 10 nm, since the maximum temperature at which cleaning up of NOx is conducted shifts toward the exhaust gas high temperature region side, whereas the lower limit value for the average particle size d₁ of the Pt particles is preferably 3 nm. If d₁ is < 3 nm, the NOx clean-up temperature range tends to become narrow.

The Pt particles are supported on an SiO₂Al₂O₃ support. Examples of the zeolite used include β zeolite, ZSM-5 zeolite, Y zeolite, and mordenite. As the other components, TiO₂ is used for the purpose of improving the durability against sulfate, if necessary. These components are attached in the form of layers, together with a binder, to an inner face of each cell of a ceramic honeycomb support, thus forming a washcoat. Examples of the binder include alumina and silica.

The content of each component of the washcoat is set as follows.

Amount of Pt added a: 2.5 g/L ≤ a ≤ 4 g/L; it is undesirable if a < 2.5 g/L since the number of active sites decreases and sufficient NOx clean-up performance cannot be achieved, whereas it is undesirable if a > 4 g/L since the NOx clean-up performance saturates.

SiO₂-Al₂O₃ content b: 50 g/L ≤ b ≤ 90 g/L; if b < 50 g/L, the area of contact with exhaust gas becomes small, whereas if b > 90 g/L, since the Pt concentration is diluted, the NOx clean-up rate decreases.

CeO₂ content c: 15 g/L ≤ c ≤ 25 g/L; if c < 15 g/L, since the amount of NOx adsorbed decreases, cleaning up of NOx in the exhaust gas low temperature region is insufficient, whereas if c > 25 g/L, the NOx clean-up rate tends to decrease.

Zeolite content d: 35 g/L ≤ d ≤ 65 g/L; it is undesirable if d < 35 g/L since adsorption of HC which is necessary for cleaning up NOx, cannot be carried out efficiently, whereas it is undesirable if d > 65 g/L since the Pt concentration is diluted. When a plurality of zeolites are used, the content of each zeolite is set in the above range.

TiO₂ content e: 3.5 g/L ≤ e ≤ 6.5 g/L; it is undesirable if e < 3.5 g/L since an effect of suppressing sulfur cannot be obtained and thus the NOx clean-up performance is degraded, whereas it is undesirable if e > 6.5 g/L since the effect of suppressing sulfur saturates.

The second cleaner 5 includes Pt particles having an average particle size d₂ of ≥ 15 nm and a zeolite (Zeo). It is undesirable if the average particle size d₂ of the Pt particles is < 15 nm, since the maximum temperature at which cleaning up of NOx is conducted shifts toward the exhaust gas low temperature region side. It is preferable for the upper limit value of the average particle size d₂ of the Pt particles to be 30 nm. If d₂ > 30 nm, the NOx clean-up rate tends to decrease accompanying a decrease in the specific surface area of the Pt particles.

The Pt particles are supported on an SiO₂-Al₂O₃ support. Examples of the zeolite used include β zeolite, ZSM-5 zeolite, Y zeolite, and mordenite. As the other components, TiO₂ is used for the purpose of improving the durability against sulfate, if necessary. These components are attached in the form of layers, together with a binder, to an inner face of each cell of a ceramic honeycomb support, thus forming a washcoat. Examples of the binder include alumina and silica.

The content of each component of the washcoat is set as follows.

Amount of Pt added a: 1.3 g/L ≤ a ≤ 2.5 g/L; it is undesirable if a < 1.3 g/L since the number of active sites decreases and sufficient NOx clean-up performance cannot be achieved, whereas it is undesirable if a > 2.5 g/L since the NOx clean-up performance saturates.

SiO₂-Al₂O₃ content b: 40 g/L ≤ b ≤ 65 g/L; if b < 40 g/L, the area of contact with exhaust gas becomes small, whereas if b > 65 g/L, since the Pt concentration is diluted, the NOx clean-up rate decreases.

Zeolite content d: 55 g/L ≤ d ≤ 85 g/L; it is undesirable if d < 55 g/L since adsorption of HC which is necessary for cleaning up NOx, cannot be carried out efficiently, whereas it is undesirable if d > 85 g/L since the Pt concentration is diluted.

TiO₂ content e: 3.5 g/L ≤ e ≤ 6.5 g/L; it is undesirable if e < 3.5 g/L since the effect of suppressing sulfur cannot be obtained and the NOx clean-up performance is degraded, whereas it is undesirable if e > 6.5 g/L since the effect of suppressing sulfur saturates.

Specific examples are explained below.

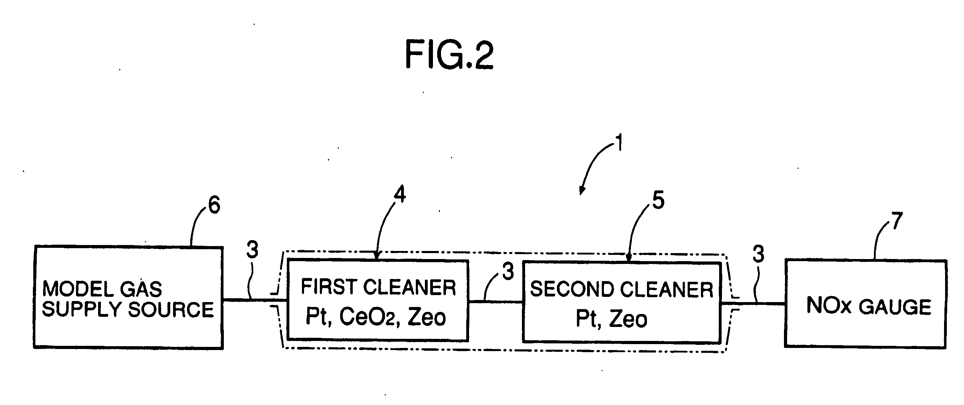

As shown in FIG. 2, an experimental NOx clean-up system 1 is equipped with a model gas supply source 6, which corresponds to the diesel engine 2. A first cleaner 4 or a first comparison cleaner is installed on the upstream side of an exhaust pipe 3 extending from the model gas supply source 6. A second cleaner 5 or a second comparison cleaner is installed on the downstream side. An NOx gauge 7 is connected to the exit of the exhaust pipe 3.

Assuming the case of exhaust gas of a diesel engine, the following model gas was prepared. Model gas: NO 160 ppm; HC 420 ppm C; CO 1100 ppm; CO₂ 3.6%; O₂ 15%; H₂O 35%; balance N₂.

### (Example-I)

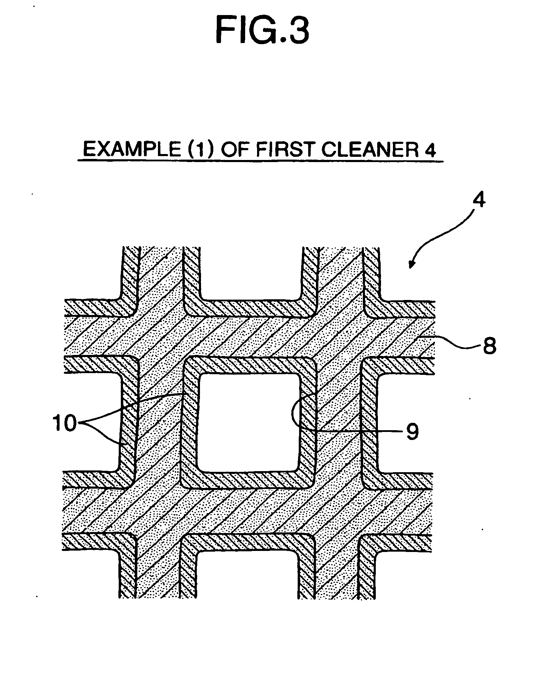

As shown in FIG. 3, in Example (1) of the first cleaner 4, the inner face of each cell 9 of a honeycomb support 8 had a washcoat 10 with a single layer structure. The average particle size d₁ of Pt particles was 10 nm, and each component of the washcoat 10 and the content thereof were as follows. Amount of Pt added a: 3.2 g/L; SiO₂-Al₂O₃ content b: 71.8 g/L; CeO₂ content c: 20 g/L; β zeolite content d: 50 g/L; ZSM-5 zeolite content d: 50 g/L; TiO₂ content e: 5 g/L.

For comparison, a first comparison cleaner was prepared that had the same arrangement as that of Example (1) of the first cleaner 4, except that it contained no CeO₂.

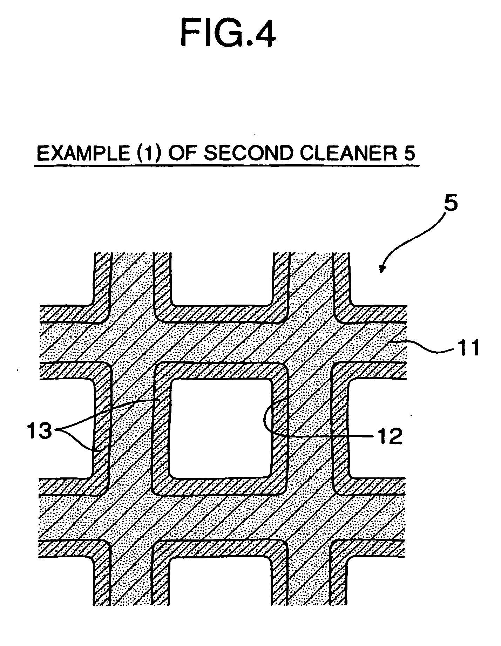

As shown in FIG. 4, in Example (1) of the second cleaner 5, the inner face of each cell 12 of a honeycomb support 11 had a washcoat 13 with a single layer structure. The average particle size d₂ of Pt particles was 15 nm, and each component of the washcoat 13 and the content thereof were as follows. Amount of Pt added a: 1.9 g/L; SiO₂-Al₂O₃ content b: 53.1 g/L; β zeolite content d: 70 g/L; TiO₂ content e: 5 g/L.

For comparison, a second comparison cleaner was prepared that had the same arrangement as that of Example (1) of the second cleaner 5, except that the average particle size d₂ of Pt particles was set at 10 nm.

As shown in Table 1, Example-A of the experimental NOx control system 1 was a combination of Example (1) of the first cleaner 4 and Example (1) of the second cleaner 5; Example-B was a combination of the first and second comparison cleaners; and Example-C was a combination of Example (1) of the first cleaner 4 and the second comparison cleaner. In Example-A to Example-C, while increasing the temperature of the model gas in the model gas supply source 6 at a temperature increase rate of 20°C/min from room temperature to 300°C, the model gas was passed through the exhaust pipe 3 at a space velocity SV of 50,000/h, and the average NOx clean-up rate of the model gas at temperatures of 50°C to 300°C was measured by the NOx gauge 7.

**Table 1**

| Experimental NOx control system | | | Average NOx clean-up rate |
|---|---|---|---|
| Example-A | Example (1) of first cleaner Pt (d₁): 10 nm; with CeO₂ | Example (1) of second cleaner Pt (d₂): 15 nm | 24% |
| Example-B | First comparison cleaner Pt (d₁): 10 nm; without CeO₂ | Second comparison cleaner Pt (d₂): 10 nm | 15% |
| Example-C | Example (1) of first cleaner Pt (d₁): 10 nm; with CeO₂ | Second comparison cleaner Pt (d₂): 10 nm | 15% |

As is clear from Table 1, in Example-A, in the low exhaust gas temperature region the Pt particles of Example (1) of the first cleaner 4 exhibited catalytic activity so as to clean up the NOx, and the CeO₂ adsorbed NOx, whereas in the high exhaust gas temperature region the Pt particles of Example (1) of the second cleaner 5 exhibited catalytic activity so as to clean up the NOx in the exhaust gas and the NOx released from the CeO₂, thus giving a high average NOx clean-up rate.

In Example-B, since NOx could not be adsorbed at all in the low exhaust gas temperature region, and cleaning up of NOx was insufficient in the high exhaust gas temperature region, the average NOx clean-up rate was lower than that of Example-A. In Example-C, although cleaning up of the NOx was good in the low exhaust gas temperature region, cleaning up of the NOx was insufficient in the high exhaust gas temperature region, and thus the average NOx clean-up rate was lower than that of Example-A.

### (Example-II)

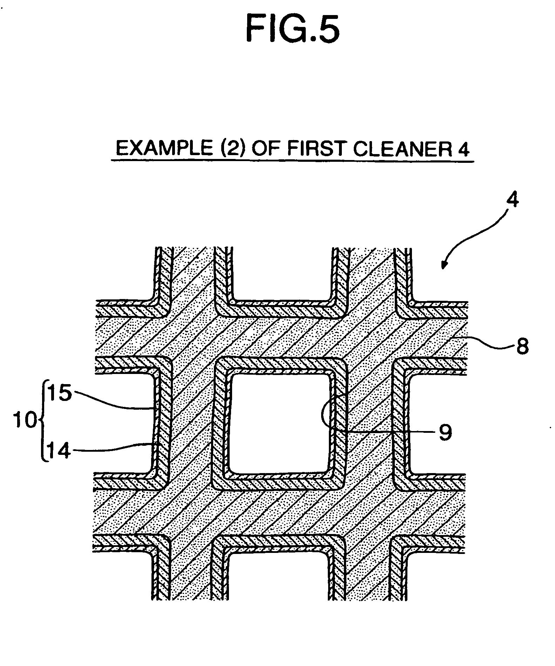

Example (2) of the first cleaner 4 shown in FIG. 5 had a washcoat 10 having a two layer structure on the inner face of each cell 9 of the honeycomb support 8. The average particle size d₁ of the Pt particles was 10 nm, and each component and the content thereof in a first layer 14 which was on the inside in the washcoat 10 were as follows. Amount of Pt added a: 3.2 g/L; SiO₂-Al₂O₃ content b: 71.8 g/L; β zeolite content d: 50 g/L; TiO₂ content e: 5 g/L. Each component and the content thereof in a second layer 15 which was on the outside in the washcoat 10 were as follows. CeO₂ content c: 20 g/L; ZSM-5 zeolite content d: 50 g/L.

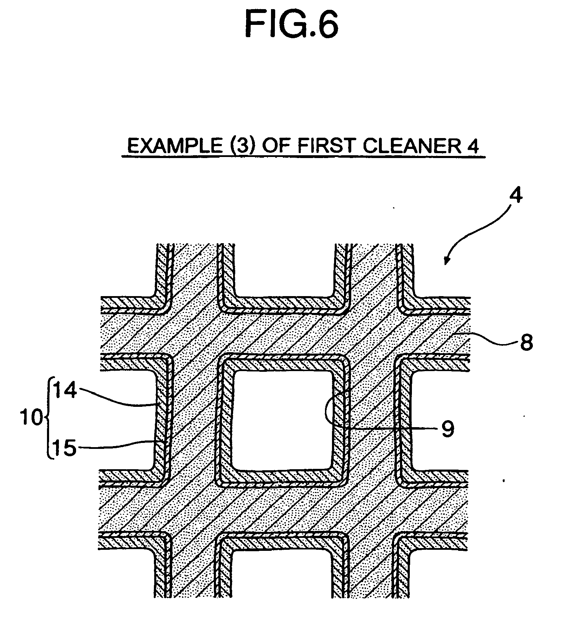

Example (3) of the first cleaner 4 shown in FIG. 6 had an arrangement in which the first layer 14 of Example (2) was placed on the outside and the second layer 15 was placed on the inside.

That is, in Example (1) of the first cleaner 4 shown in FIG. 3 the CeO₂ was in a mixed state, in Example (2) of the first cleaner 4 shown in FIG. 5 the CeO₂ was on the outside, and in Example (3) of the first cleaner 4 shown in FIG. 6 the CeO₂ was on the inside.

As shown in Table 2, Example-D of the experimental NOx control system 1 was a combination of Example (2) of the first cleaner 4 and Example (1) of the second cleaner 5; and Example-E was a combination of Example (3) of the first cleaner 4 and Example (1) of the second cleaner 5. In Example-D and Example-E, while increasing the temperature of the model gas in the model gas supply source 6 at a temperature increase rate of 20°C/min from room temperature to 300°C, the model gas was passed through the exhaust pipe 3 at a space velocity SV of 50,000/h, and the average NOx clean-up rate of the model gas at temperatures from 50°C to 300°C was measured by the NOx gauge 7. Table 2 includes data related to Example-A for comparison purposes.

**Table 2**

| Experimental NOx control system | | | Average NOx clean-up rate |
|---|---|---|---|
| Example-A | Example (1) of first cleaner CeO₂: in mixed state | Example (1) of second cleaner | 24% |
| Example-D | Example (2) of first cleaner CeO₂: on outside | | 21% |
| Example-E | Example (3) of first cleaner CeO₂: on inside | | 29% |

From Table 2, it was found that, when CeO₂ was placed on the inside as shown in FIG. 6, the average NOx clean-up rate was the highest. It is surmised that NOx released from the CeO₂ is cleaned by the Pt particles disposed on the outside and the β zeolite in cooperation.

### (Example-III)

Example (4) of the first cleaner 4 was prepared in the same manner as in the case of Example (3) of the first cleaner 4, except that the average particle size d₁ of the Pt particles was changed to 5 nm in Example (3) of the first cleaner 4 shown in FIG. 6, that is, one in which CeO₂ was placed on the inside. Similarly, Example (5) of the first cleaner 4 was prepared in the same manner as in the case of Example (3) of the first cleaner 4, except that the average particle size d₁ of the Pt particles was changed to 3 nm.

Example (2) of the second cleaner 5 was prepared in the same manner as in the case of Example (1) of the second cleaner 5, except that the average particle size d₂ of the Pt particles was changed to 20 nm in Example (1) of the second cleaner 5 shown in FIG. 4. Similarly, Example (3) of the second cleaner 5 was prepared in the same manner as in the case of Example (1) of the second cleaner 5, except that the average particle size d₂ of the Pt particles was changed to 30 nm. Similarly, Example (4) of the second cleaner 5 was prepared in the same manner as in the case of Example (1) of the second cleaner 5, except that the average particle size d₂ of the Pt particles was changed to 50 nm.

As shown in Table 3, Example-F of the experimental NOx control system 1 was a combination of Example (4) of the first cleaner 4 and Example (1) of the second cleaner 5; Example-G was a combination of Example (5) of the first cleaner 4 and Example (1) of the second cleaner 5; Example-H was a combination of Example (3) of the first cleaner 4 and Example (2) of the second cleaner 5; Example-I was a combination of Example (3) of the first cleaner 4 and Example (3) of the second cleaner 5; and Example-J was a combination of Example (3) of the first cleaner 4 and Example (4) of the second cleaner 5.

In Example-F to Example-J, while increasing the temperature of the model gas in the model gas supply source 6 at a temperature increase rate of 20°C/min from room temperature to 300°C, the model gas was passed through the exhaust pipe 3 at a space velocity SV of 50,000/h, and the average NOx clean-up rate of the model gas at temperatures from 50°C to 300°C was measured by the NOx gauge 7. Table 3 includes the data related to Example-E for comparison purposes.

**Table 3**

| Experimental NOx control system | | | Average NOx clean-up rate |
|---|---|---|---|
| Example-E | Example (3) of first cleaner Pt(d₁):10nm | Example (1) of second cleaner Pt (d₂): 15 nm | 29% |
| Example-F | Example (4) of first cleaner Pt (d₁): 5 nm | | 32% |
| Example-G | Example (5) of first cleaner Pt (d₁): 3 nm | | 31% |
| Example-H | Example (3) of first cleaner Pt(d₁): 10 nm | Example (2) of second cleaner Pt(d₂): 20 nm | 33% |
| Example-I | | Example (3) of second cleaner Pt (d₂): 30 nm | 29% |
| Example-J | | Example (4) of second cleaner Pt (d₂): 50 nm | 26% |

It can be seen from Table 3 that, in order to improve the average NOx clean-up rate, the average particle size d₁ of the Pt particles in the first cleaner 4 is preferably 3 nm ≤ d₁ ≤ 10 nm and the average particle size d₂ of the Pt particles in the second cleaner 5 is preferably 15 nm ≤ d₂ ≤ 30 nm. In the first cleaner 4, if the average particle size d₁ of the Pt particles is too small, the NOx clean-up temperature range becomes small, whereas in the second cleaner 5 if the average particle size d₂ of the Pt particles is too large, the average NOx clean-up rate decreases accompanying a decrease in the specific surface area.

### (Example-IV)

Example (6) of the first cleaner 4 was prepared in the same manner as in the case of Example (4) of the first cleaner 4, except that the CeO₂ content c was changed to 10 g/L from Example (4) of the first cleaner 4 shown in FIG. 6, that is, one in which CeO₂ was disposed on the inside and the CeO₂ content c was set at 20 g/L. Similarly, Example (7) of the first cleaner 4 was prepared in the same manner as in the case of Example (4) of the first cleaner 4, except that the CeO₂ content c was changed to 15 g/L. Similarly, Example (8) of the first cleaner 4 was prepared in the same manner as in the case of Example (4) of the first cleaner 4, except that the CeO₂ content c was changed to 25 g/L. Similarly, Example (9) of the first cleaner 4 was prepared in the same manner as in the case of Example (4) of the first cleaner 4, except that the CeO₂ content c was changed to 30 g/L.

As shown in Table 4, Example-K of the experimental NOx control system 1 was a combination of Example (6) of the first cleaner 4 and Example (1) of the second cleaner 5; Example-L was a combination of Example (7) of the first cleaner 4 and Example (1) of the second cleaner 5; Example-M was a combination of Example (8) of the first cleaner 4 and Example (1) of the second cleaner 5; and Example-N was a combination of Example (9) of the first cleaner 4 and Example (1) of the second cleaner 5.

In Example-K to Example-N, while increasing the temperature of the model gas in the model gas supply source 6 at a temperature increase rate of 20°C/min from room temperature to 300°C, the model gas was passed through the exhaust pipe 3 at a space velocity SV of 50,000/h, and the average NOx clean-up rate of the model gas at temperatures from 50°C to 300°C was measured by the NOx gauge 7. Table 4 includes data related to Example-F for comparison purposes.

**Table 4**

| Experimental NOx control system | | | Average NOx clean-up rate |
|---|---|---|---|
| Example-K | Example (6) of first cleaner CeO₂ content c: 10 g/L | Example (1) of second cleaner | 19% |
| Example-L | Example (7) of first cleaner CeO₂ content c: 15 g/L | | 25% |
| Example-F | Example (4) of first cleaner CeO₂ content c: 20 g/L | | 32% |
| Example-M | Example (8) of first cleaner CeO₂ content c: 25 g/L | | 27% |
| Example-N | Example (9) of first cleaner CeO₂ content c: 30 g/L | | 20% |

It can be seen from Table 4 that, in order to improve the average NOx clean-up rate, the CeO₂ content c is preferably 15 g/L ≤ c ≤ 25 g/L. When the CeO₂ content is too small, the amount of NOx adsorbed is small, and cleaning up of NOx is insufficient in the low exhaust gas temperature region; when it is too large, the average NOx clean-up rate tends to decrease.

A diesel engine exhaust emission control system includes, in an exhaust pipe 3 of a diesel engine 2, a first cleaner 4 and a second cleaner 5 installed sequentially from the diesel engine 2 side. The first cleaner 4 includes Pt particles having an average particle size d₁ of ≤ 10 nm, CeO₂, and a zeolite. The second cleaner 5 includes Pt particles having an average particle size d₂ of ≥ 15 nm, and a zeolite. Thus, it is possible to sufficiently clean up NOx throughout the entire exhaust gas temperature region.

## Claims

1. A diesel engine exhaust emission control system comprising, in an exhaust pipe (3) of a diesel engine (2):
a first cleaner (4) comprising Pt particles having an average particle size d₁ of ≤ 10 nm, and a zeolite; and
a second cleaner (5) comprising Pt particles having an average particle size d₂ of ≥ 15 nm, and a zeolite;
the first cleaner (4) and the second cleaner (5) being installed sequentially from the diesel engine (2) side,
**characterized in that**
the first cleaner (4) comprises CeO₂,
the first cleaner (4) being formed as a washcoat (10) on a face of a support,
the washcoat having a two layer structure with the CeO₂ being placed in the inside layer.

2. A diesel engine exhaust emission control system according to claim 1,
wherein the first cleaner (4) and/or the second cleaner (5) comprises TiO₂.

## Patentansprüche

1. Dieselmotor-Abgasemissionssteuer/regelsystem, umfassend in einem Abgasrohr (3) eines Dieselmotors (2):
einen ersten Reiniger (4), umfassend Pt-Partikel mit einer durchschnittlichen Partikelgröße d₁ ≤ 10 nm und einen Zeolith, und
einen zweiten Reiniger (5), umfassend Pt-Partikel mit einer durchschnittlichen Partikelgröße d₂ ≥ 15 nm und einen Zeolith,
wobei der erste Reiniger (4) und der zweite Reiniger (5) von der Seite des Dieselmotors (2) her aufeinander folgend angebracht sind, **dadurch gekennzeichnet, dass** der erste Reiniger (4) CeO₂ umfasst,
wobei der erste Reiniger (4) als ein Washcoat (10) auf einer Fläche eines Trägers ausgebildet ist,
wobei der Washcoat eine Zweischichtstruktur aufweist, wobei das CeO₂ in der inneren Schicht angeordnet ist.

2. Dieselmotor-Abgasemissionssteuer/regelsystem nach Anspruch 1,
wobei der erste Reiniger (4) und/oder der zweite Reiniger (5) TiO₂ umfasst.

## Revendications

1. Système de contrôle d'émission d'un gaz d'échappement de moteur diesel comprenant, dans un tuyau d'échappement (3) d'un moteur diesel (2) :
un premier purificateur (4) comprenant des particules Pt présentant une taille particulaire moyenne d₁ ≤ 10 nm, et une zéolite ; et
un second purificateur (5) comprenant des particules Pt présentant une taille particulaire moyenne d₂ ≥ 15 nm, et une zéolite ;
le premier purificateur (4) et le second purificateur (5) étant installés séquentiellement à partir du côté du moteur diesel (2),
**caractérisé en ce que**
le premier purificateur (4) comprend du CeO₂,
le premier purificateur (4) étant formé en tant qu'enduit de lavage (10) sur une face d'un support, l'enduit de lavage présentant une structure bicouche, le CeO₂ étant placé dans la couche intérieure.

2. Système de contrôle d'émission d'un gaz d'échappement de moteur diesel selon la revendication 1, dans lequel le premier purificateur (4) et/ou le second purificateur (5) comprennent du TiO₂.
